# EUROPEAN PATENT APPLICATION

(11) **EP 3 487 094 A1**
(43) Date of publication of application: **22.05.2019**
(21) Application number: 16912636.4
(22) Date of filing: 08.08.2016
(51) Int. Cl.: H04J 14/00, H04B 10/572, H04J 14/02

(54) **OPTICAL RELAY DEVICE, NETWORK MANAGEMENT DEVICE, OPTICAL TRANSMISSION SYSTEM, AND SETTING CHANGE METHOD**

(71) Applicant: Mitsubishi Electric Corporation, Chiyoda-ku Tokyo 100-8310 (JP)
(72) Inventor: SANO, Hayato, Tokyo 100-8310 (JP); YOSHIDA, Tsuyoshi, Tokyo 100-8310 (JP); NOGUCHI, Yuita, Tokyo 100-8310 (JP)
(74) Representative: Cabinet Plasseraud
(86) International application number: PCT/JP2016/073308
(87) International publication number: WO 2018/029752

(57) **Abstract**

The present invention provides an optical relay (20) of an optical transmission system including an optical transmission network formed by a plurality of the optical relays and a network management apparatus that manages the optical transmission network. The optical relays each include an optical transmitter (23) that can generate an optical signal of a specific wavelength, a transmission wavelength selective switch (24) that can switch a path on a wavelength basis, and a transmission compensation control unit (21) that controls the optical transmitter. When the transmission compensation control unit receives, from the network management apparatus, information on the band limitation occurrence frequency that is the number of occurrences of band limitation when the optical signal generated by the optical transmitter passes through another one of the optical relays, the transmission compensation control unit adjusts a frequency of the optical signal by changing a setting of the optical transmitter on the basis of the information received.

## Description

### Field

The present invention relates to an optical relay for relaying a wavelength division multiplexed optical signal, a network management apparatus, an optical transmission system, and a setting changing method.

### Background

A wavelength division multiplexed optical communication system has increased the capacity of information communication. The wavelength division multiplexed optical communication system is also called a wavelength division multiplexing (WDM) system. In recent years, the volume of information transmitted and received by one communication terminal such as a smart phone has increased with the increase in performance thereof and communication between devices, where further increase in capacity of information communication is demanded. Moreover, for the purpose of achieving increased reliability of a communication path and a communication device as well as an effective use of a frequency band, there is a growing demand for a network that can change and optimize the network configuration according to demand. In order to meet these demands, a multipath WDM system supporting flexible grid defined in Non Patent Literature 1 has been put to practical use. The multipath WDM system supporting flexible grid can change the bandwidth of each wavelength.

The multipath WDM system is also required to have a function for changing the destination of a signal and switching the path thereof during network operation. When a failure occurs, for example, the system needs to switch the transmission path of a signal such that the signal does not to pass through the site of failure. A relay node as a relay point in a network performs compensation for power loss of a signal, path control, and signal insertion and branching. Such a relay node requires a function for controlling the path wavelength by wavelength, that is, frequency by frequency. Non Patent Literature 2 for example describes a reconfigurable optical add/drop multiplexer (ROADM) equipped with a wavelength selective switch (WSS) that can control the path by the wavelength. The wavelength selective switch can arbitrarily change the relationship between the wavelength and port, and also the transmission frequency band.

### Citation List

### Non Patent Literature

Non Patent Literature 1: ITU-T G. 694. 1
Non Patent Literature 2: "Wavelength-Selective Switches for ROADM Applications", T. A. Strasser, Member, IEEE, and J. L. Wagener, IEEE JOURNAL OF SELECTED TOPICS IN QUANTUM ELECTRONICS, VOL. 16, NO. 5, SEPTEMBER/OCTOBER 2010.

### Summary

### Technical Problem

The multipath WDM system supporting flexible grid typically uses the above wavelength selective switch. The wavelength selective switch assigns a port for each transmission frequency band so that, when different ports are designated for a certain signal and a signal adjacent thereto, the signals need to be separated due to a sharp transmission spectrum characteristic between the signals. However, it is difficult to obtain an ideal transmission spectrum characteristic, whereby band limitation occurs to remove a spectral component of the signal near the edge of the transmission frequency band. A phenomenon in which the band limitation occurs is also called pass-band narrowing (PBN). The occurrence of PBN causes deterioration in signal quality such as an increase in a signal error rate. A signal can be subjected to PBN the number of times corresponding to the number of relay nodes through which the signal passes, thereby deteriorating more and more in signal quality due to PBN.

As a measure against the deterioration in signal quality due to PBN, a guard band can be provided between signals to reduce the influence of PBN. However, the guard band increases the frequency band not occupied by a signal and results in an ineffective use of finite frequency spectrum resources, thereby causing another problem such as a decrease in maximum transmission capacity or a decrease in frequency utilization efficiency.

The present invention has been made in view of the above, and an object of the invention is to provide an optical relay that can improve communication quality while avoiding a decrease in transmission capacity.

### Solution to Problem

In order to solve the above problems and achieve the object, an optical relay of an optical transmission system according to the present invention includes an optical transmission network formed by a plurality of the optical relays and a network management apparatus that manages the optical transmission network. The optical relays each include an optical signal generator that can generate an optical signal of a specific wavelength, a wavelength selective switch that can switch a path on a wavelength basis, and a controller that controls the optical signal generator. When the controller receives, from the network management apparatus, information on a band limitation occurrence frequency that is the number of occurrences of band limitation when the optical signal generated by the optical signal generator passes through another one of the optical relays, the controller adjusts a frequency of the optical signal by changing a setting of the optical signal generator on the basis of the information received.

### Advantageous Effects of Invention

The optical relay according to the present invention can improve communication quality while avoiding a decrease in transmission capacity of the optical transmission system.

### Brief Description of Drawings

FIG. 1 is a diagram illustrating an example of an optical transmission system according to a first embodiment.
FIG. 2 is a diagram for explaining band limitation occurring in a wavelength selective switch.
FIG. 3 is a diagram for explaining band limitation occurring when a setting of the wavelength selective switch is changed.
FIG. 4 is a diagram illustrating an example of the configuration of a network management apparatus and optical relays included in the optical transmission system according to the first embodiment.
FIG. 5 is a diagram for explaining an optical signal and a relay node subjected to a change in the state of occurrence of PBN with a change in the setting.
FIG. 6 is a flowchart illustrating an example of the operation of the network management apparatus according to the first embodiment.
FIG. 7 is a flowchart illustrating an example of the operation of a transmitting node according to the first embodiment.
FIG. 8 is a table illustrating an example of a transmission compensation reference table held by the transmitting node according to the first embodiment.
FIG. 9 is a diagram illustrating an example of transmission compensation performed by the transmitting node according to the first embodiment.
FIG. 10 is a diagram illustrating a first step in an overview of the operation of the optical transmission system according to the first embodiment.
FIG. 11 is a diagram illustrating a second step in the overview of the operation of the optical transmission system according to the first embodiment.
FIG. 12 is a diagram illustrating a third step in the overview of the operation of the optical transmission system according to the first embodiment.
FIG. 13 is a diagram illustrating a fourth step in the overview of the operation of the optical transmission system according to the first embodiment.
FIG. 14 is a diagram illustrating a fifth step in the overview of the operation of the optical transmission system according to the first embodiment.
FIG. 15 is a graph for explaining an effect of the optical transmission system according to the first embodiment.
FIG. 16 is a diagram illustrating an example of the hardware configuration of each device included in the optical transmission system according to the first embodiment.
FIG. 17 is a diagram illustrating an example of transmission compensation performed by a transmitting node according to a second embodiment.
FIG. 18 is a diagram illustrating an example of transmission compensation performed by a transmitting node according to a third embodiment.

### Description of Embodiments

An optical relay, a network management apparatus, an optical transmission system, and a setting changing method according to embodiments of the present invention will now be described in detail with reference to the drawings. Note that the present invention is not limited to the embodiments.

### First Embodiment.

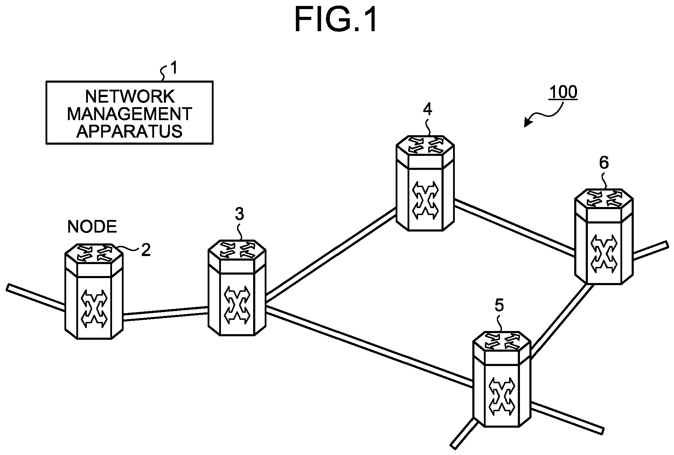

FIG. 1 is a diagram illustrating an example of an optical transmission system according to a first embodiment of the present invention. An optical transmission system 100 according to the first embodiment is a multipath WDM system (multipath wavelength division multiplexed transmission system) supporting flexible grid, and includes a network management apparatus 1 and nodes 2 to 6 which are optical relays. Although not illustrated in FIG. 1, the nodes 2 to 6 each include a wavelength selective switch (WSS). Note that the number of nodes and connection among the nodes are not limited to the example illustrated in FIG. 1. The nodes 2 to 6 are each connected to one or more other nodes via an optical transmission line to form an optical transmission network. Specifically, the node 2 is connected to the node 3, and the node 3 is connected to the nodes 2, 4, and 5. The node 4 is connected to the nodes 3 and 6, and the node 5 is connected to the nodes 3 and 6. The node 6 is connected to the nodes 4 and 5. Moreover, the network management apparatus 1 is connected to each of the nodes 2 to 6 via a control communication line (not illustrated).

The network management apparatus 1 is an apparatus that manages the optical transmission network and has a function of changing the settings of the nodes 2 to 6 forming the optical transmission network. Each of the nodes 2 to 6 outputs an input optical signal to a predetermined optical transmission line. The destination of each optical signal is instructed by the network management apparatus 1.

Here, band limitation (PBN) that occurs when an optical signal is processed by the wavelength selective switch (WSS) applied in a typical multipath WDM system will be briefly described.

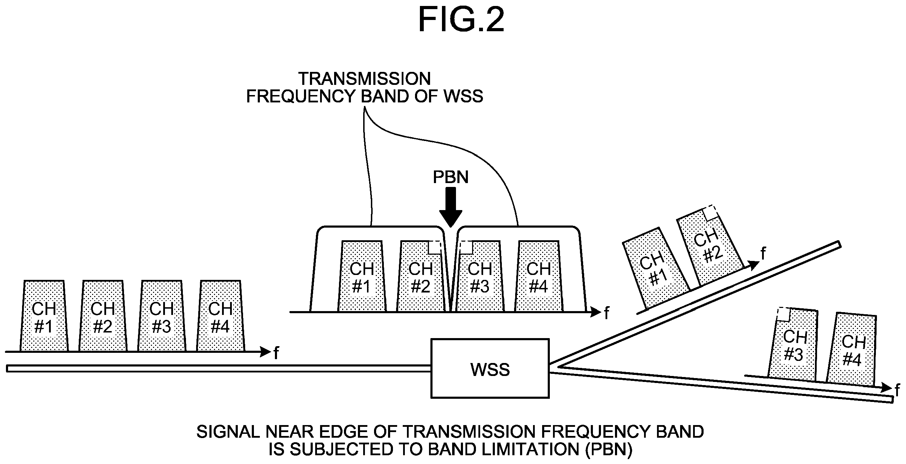

FIG. 2 is a diagram for explaining band limitation that occurs in the WSS. FIG. 2 illustrates an example where four optical signals of CHs #1 to #4 are multiplexed and input to the WSS, which divides the four optical signals into two and relays the signals into two paths. In the example illustrated in FIG. 2, the WSS divides the four optical signals into CHs #1 and #2 and CHs #3 and #4 to output the signals into two paths from different output ports. In this case, a signal near the edge of the transmission frequency band of each output port is subjected to band limitation. Specifically, the optical signals of CHs #2 and #3 adjacent to each other before being relayed are subjected to band limitation. The optical signal of CH #2 is subjected to band limitation on a higher frequency (HF) side thereof, and the optical signal of CH #3 is subjected to band limitation on a lower frequency (LF) side thereof. Note that although FIG. 2 illustrates the example where the optical signals of CHs #2 and #3 are subjected to band limitation, a lower frequency side of the optical signal of CH #1 and a higher frequency side of the optical signal of CH #4 may also be subjected to band limitation depending on the setting of the output port.

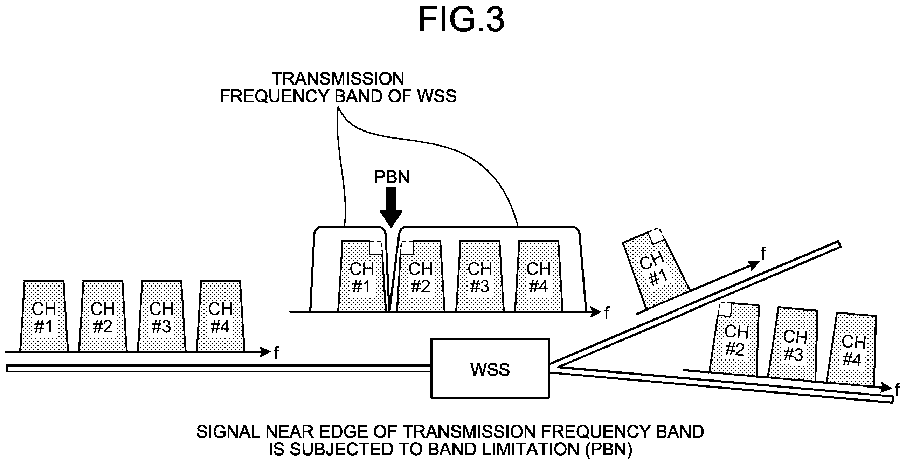

Moreover, the multipath WDM system can change the path of each optical signal during network operation, in which case the node and optical signal subjected to band limitation may change. The optical signal subjected to band limitation changes when, for example, the setting of the WSS illustrated in FIG. 2 is changed so that the four input optical signals are divided into CH #1 and CHs #2 to #4 and relayed into two paths. Specifically, band limitation occurring on the higher frequency side of the optical signal of CH #2 and the lower frequency side of the optical signal of CH #3 before the path change no longer occurs after the path change, but instead, band limitation occurs on a higher frequency side of the optical signal of CH #1 and a lower frequency side of the optical signal of CH #2 (see FIG. 3). FIG. 3 is a diagram for explaining band limitation that occurs when the setting of the WSS is changed.

When the WSS divides input optical signals having corresponding frequencies into two or more and outputs the signals from different output ports as described above, an optical signal on the side of the lowest frequency and an optical signal on the side of the highest frequency among the optical signals output from the different output ports are likely to be subjected to band limitation. In response to such a problem, when the path setting in the optical transmission network is changed, the optical transmission system according to the present embodiment identifies the node and optical signal affected by the change in setting and subjected to band limitation, thereby reducing the influence of band limitation by changing the setting of the node that transmits the optical signal being identified.

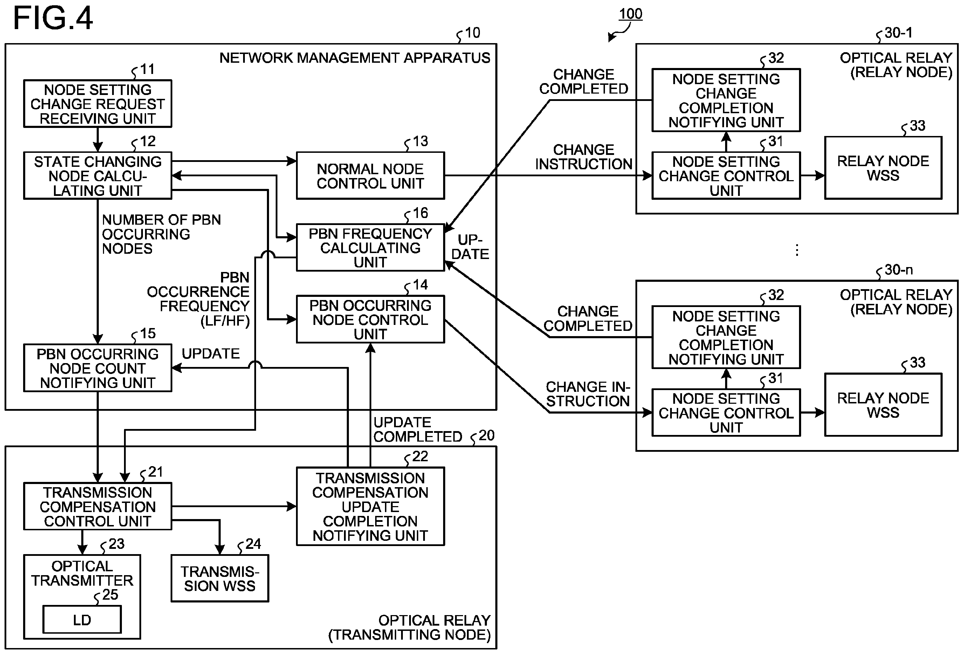

FIG. 4 is a diagram illustrating an example of the configuration of a network management apparatus and optical relays included in the optical transmission system according to the first embodiment.

The optical transmission system 100 illustrated in FIG. 4 includes a network management apparatus 10 corresponding to the network management apparatus 1 illustrated in FIG. 1 and optical relays 20 and 30-1 to 30-n corresponding to the nodes 2 to 6 illustrated in FIG. 1. The reference character "n" is an integer of 2 or more.
The optical relay 20 and each of the optical relays 30-1 to 30-n are the same apparatus but assigned different reference numerals in FIG. 4 for convenience of description. The different reference numerals are assigned to describe an example where, in the present embodiment, the optical relay 20 operates as a transmitting node which is a node for transmitting an optical signal, and the optical relays 30-1 to 30-n each operate as a relay node for transferring an optical signal received from a certain path to another optical relay. Regarding the optical relay 20 as the transmitting node, only the components necessary for transmitting an optical signal, that is, the components necessary for operating as the transmitting node, are described. Regarding each of the optical relays 30-1 to 30-n as the relay node, only the components necessary for relaying an optical signal, that is, the components necessary for operating as the relay node, are described. In the following description, the optical relay 20 may be referred to as a transmitting node 20 and the optical relays 30-1 to 30-n as relay nodes 30-1 to 30-n for the sake of convenience. Note that the relay nodes 30-1 to 30-n are collectively referred to as a relay node 30 when the nodes need not be distinguished from one another. Moreover, the transmitting node 20 and the relay nodes 30-1 to 30-n may be simply and collectively referred to as "nodes" in some cases.

The network management apparatus 10 monitors and manages the state of the optical transmission network formed by the transmitting node 20 and the relay nodes 30-1 to 30-n, thereby controlling the node setting of each node. The node setting is the setting related to the operation of relaying an optical signal by each node such as an optical signal of which wavelength is output to which output port. When the whole optical transmission system is considered, the node setting can be said to be the setting related to the transmission path of each optical signal transmitted. The relay node 30 is disposed at a relay point of the optical transmission network to perform compensation for power loss occurring in the transmission line, signal path control, and signal insertion and branching. Among the nodes forming the optical transmission network, the transmitting node 20 is a node subjected to transmission compensation when the node setting is changed.
Transmission compensation is a process for reducing PBN that occurs in the optical transmission network. A signal transmitted from the transmitting node 20 propagates through the transmission line to be relayed by some of the relay nodes 30 and branched or received at the last node on the transmission path.

The network management apparatus 10 includes a node setting change request receiving unit 11, a state changing node calculating unit 12, a normal node control unit 13, a PBN occurring node control unit 14, a PBN occurring node notifying unit 15, and a PBN frequency calculating unit 16.

The node setting change request receiving unit 11 receives a request for changing the node setting from an external network administrator or the like. Changing the node setting is to change the setting of parameters and the like related to the relay operation of each node and includes, for each node, changing the setting about an optical signal of which wavelength is output to which output port, and the setting about an optical signal of which wavelength is received on which input port. The request for changing the node setting corresponds to a request for changing the path of an optical signal in the optical transmission network. The node setting change request receiving unit 11 is a request receiving unit that receives the request for changing the path of an optical signal in the optical transmission network.

The state changing node calculating unit 12 calculates a node subjected to a change in the state of occurrence of PBN, specifically, a node subjected to a change from a state in which PBN does not occur to a state in which PBN occurs with a change in the node setting, and a node subjected to a change from a state in which PBN occurs to a state in which PBN does not occur with a change in the node setting. The state changing node calculating unit 12 calculates the node subjected to a change in the state of occurrence of PBN for each optical signal. That is, the state changing node calculating unit 12 calculates which node among nodes located on the transmission path of each optical signal is subjected to a change in the state of occurrence of PBN on the basis of the change in the node setting. The state changing node calculating unit 12 is a band limitation occurrence frequency calculating unit.

The normal node control unit 13 instructs a change in the setting or the like to a node not subjected to PBN. The PBN occurring node control unit 14 instructs a change in the setting or the like to a node subjected to PBN. Note that FIG. 4 illustrates an example in which the relay node 30-1 is a normal node and the relay node 30-n is a PBN occurring node, where the normal node control unit 13 instructs a change to the relay node 30-1 while the PBN occurring node control unit 14 instructs a change to the relay node 30-n. The normal node control unit 13 and the PBN occurring node control unit 14 make up a setting change unit.

The PBN occurring node count notifying unit 15 notifies the transmitting node 20 of the number of PBN occurring nodes indicating a result of calculation performed by the state changing node calculating unit 12. The PBN frequency calculating unit 16 calculates and holds the occurrence frequency of PBN for each signal every time the setting of each node is changed. The PBN frequency calculating unit 16 notifies the transmitting node 20 of the occurrence frequency of PBN for each signal held in the PBN frequency calculating unit when the PBN occurring node count notifying unit 15 notifies the transmitting node 20 of the number of PBN occurring nodes. The PBN occurring node count notifying unit 15 and the PBN frequency calculating unit 16 make up an information transmission unit.

The overall operation of the network management apparatus 10 will be described. In the network management apparatus 10, the node setting change request receiving unit 11 receives, from the network administrator, maintenance company, or the like, a piece of input information for setting or changing the destination and path of each optical signal, setting or changing insertion and branching of each optical signal for each node, and the like as a request for changing the node setting. The input information received is passed to the state changing node calculating unit 12 as node setting change information.

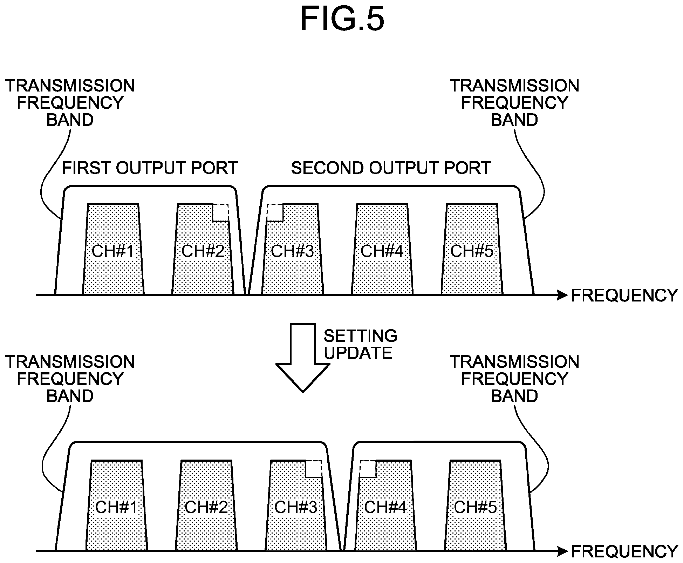

On the basis of the node setting change information received from the node setting change request receiving unit 11, the state changing node calculating unit 12 calculates an optical signal and a relay node subjected to a change in the state of occurrence of PBN with a change in the setting of each relay node. The optical signal and relay node subjected to a change in the state of occurrence of PBN with a change in the setting will be described with reference to FIG. 5. FIG. 5 is a diagram for explaining the optical signal and relay node subjected to a change in the state of occurrence of PBN with a change in the setting. There will be considered a case illustrated in FIG. 5, specifically, a case in which the relay node relays the optical signals of CH #1 to CH #5 continuous along the frequency axis, where the setting is changed to cause a change from a state in which the optical signals of CH #1 to CH #2 are transmitted through a first output port while the optical signals of CH #3 to #5 are transmitted through a second output port (a state illustrated in the upper part of FIG. 5) to a state in which the optical signals of CH #1 to CH #3 are transmitted through the first output port while the optical signals of CH #4 to #5 are transmitted through the second output port (a state illustrated in the lower part of FIG. 5). In this case, as the setting is changed, the optical signal of CH #2 is no longer the optical signal closest to the edge of the transmission frequency band, and the optical signal of CH #4 becomes the optical signal closest to the edge of the transmission frequency band. That is, as the setting is changed, PBN is eliminated in the optical signal of CH #2 and occurs in the optical signal of CH #4. Thus, the optical signals of CH #2 and CH #4 each correspond to an "optical signal subjected to a change in the state of occurrence of PBN". The optical signal of CH #3 is the optical signal closest to the edge of the transmission frequency band on the low frequency side of the second output port before the setting is changed, but is the optical signal closest to the edge of the transmission frequency band on the high frequency side of the first output port after the setting is changed. That is, as the setting is changed, PBN is eliminated on the low frequency side of the optical signal of CH #3 but occurs on the high frequency side thereof. The optical signal of CH #3 also corresponds to the "optical signal subjected to a change in the state of occurrence of PBN". Moreover, a relay node causing a change in the state of occurrence of PBN in at least one of optical signals relayed by the relay node, that is, the relay node causing the change as illustrated in FIG. 5, as the setting is changed corresponds to a "relay node subjected to a change in the state of occurrence of PBN".

The state changing node calculating unit 12 further calculates a PBN occurring node at which PBN newly occurs, a PBN eliminated node at which PBN is newly eliminated, and a setting change target node which does not correspond to either the PBN occurring node or the PBN eliminated node but is subjected to a change in the node setting, thereby associating the nodes for each signal. That is, for each optical signal, the state changing node calculating unit 12 determines which of the PBN occurring node, the PBN eliminated node, and the setting change target node each node located on the transmission path corresponds to. Here, PBN can occur on either the low frequency (LF) side or the high frequency (HF) side of the signal, so that the state changing node calculating unit 12 calculates a change in the state of occurrence of PBN on both the LF side and the HF side. Note that the setting change target node can be, for example, a node which relays the optical signals of CH #1 to CH #3 and is subjected to a change from the setting that allows the optical signals of CH #1 to CH #3 to be transmitted through the first output port to the setting that allows the optical signals of CH #1 to CH #3 to be transmitted through the second output port. This example changes the output port for the optical signals of CH #1 to CH #3, but has no change in the state of occurrence of PBN in the optical signals of CH #1 and CH #3 close to the edges of the transmission frequency band, more specifically, the state of occurrence of PBN on the low frequency side of the optical signal of CH #1 and the high frequency side of the optical signal of CH #3 before and after the setting is changed, whereby PBN does not newly occur or get eliminated. After the state changing node calculating unit 12 calculates information on the optical signal and relay node subjected to a change in the state of occurrence of PBN, the information is transmitted to the normal node control unit 13, the PBN occurring node control unit 14, and the PBN occurring node count notifying unit 15.

The normal node control unit 13 receives the information on the optical signal and relay node subjected to a change in the state of occurrence of PBN from the state changing node calculating unit 12 to generate a control instruction for a relay node other than a PBN occurring node on the basis of the information received, and transmit the instruction to the corresponding relay node. The PBN occurring node control unit 14 receives the information on the optical signal and relay node subjected to a change in the state of occurrence of PBN from the state changing node calculating unit 12 to generate a control instruction for a PBN occurring node on the basis of the information received, and transmit the instruction to the corresponding relay node. The PBN occurring node count notifying unit 15 receives the information on the optical signal and relay node subjected to a change in the state of occurrence of PBN from the state changing node calculating unit 12, and transmits the information received to the transmitting node 20. The PBN occurring node count notifying unit 15 may transmit the information received from the state changing node calculating unit 12 to each transmitting node 20 as is or upon analyzing and sorting the information received into information necessary for each transmitting node 20. For example, the PBN occurring node count notifying unit 15 may extract information on the optical signal of CH #1 from the information received and transmit the information to the transmitting node 20 that transmits the optical signal of CH #1.

The PBN frequency calculating unit 16 calculates, for each optical signal, the number of times each optical signal transmitted in the optical transmission network is subjected to PBN at the moment separately for LF and HF. That is, the PBN frequency calculating unit 16 calculates the frequency of occurrence of PBN on the LF side and the frequency of occurrence of PBN on the HF side for each optical signal. Every time a notification of completion of an update is received from a relay node at the time of a change in the node setting, the PBN frequency calculating unit 16 calculates the frequency of occurrence of PBN on the LF side (hereinafter referred to as a PBN occurrence frequency (LF)) and the frequency of occurrence of PBN on the HF side (hereinafter referred to as a PBN occurrence frequency (HF)) for each optical signal, and holds the PBN occurrence frequency (LF) and the PBN occurrence frequency (HF) calculated for each optical signal as the latest PBN occurrence frequency. The PBN occurrence frequency (LF) of each optical signal indicates the number of PBNs actually occurring on the LF side of the corresponding optical signal, that is, the number of times the optical signal is actually subjected to PBN on the LF side on the transmission path. The PBN occurrence frequency (HF) of each optical signal indicates the number of PBNs actually occurring on the HF side of the corresponding optical signal, that is, the number of times the optical signal is actually subjected to PBN on the HF side on the transmission path. Note that in the following description, the PBN occurrence frequency (LF) and the PBN occurrence frequency (HF) may be collectively referred to as a "PBN occurrence frequency (LF/HF)".

The transmitting node 20 includes a transmission compensation control unit 21, a transmission compensation update completion notifying unit 22, an optical transmitter 23, and a transmission wavelength selective switch (WSS) 24. The transmitting node 20 generates an optical signal of a specific frequency and sends the signal to the optical transmission line.

The transmission compensation control unit 21 is a controller that controls the optical transmitter 23 and the transmission wavelength selective switch 24, and performs transmission compensation on an optical signal transmitted from the transmitting node 20 by controlling at least one of the optical transmitter 23 and the transmission wavelength selective switch 24 on the basis of the information received from the network management apparatus 10. The information transmitted from the network management apparatus 10 to the transmission compensation control unit 21 is information on the number of occurrences of PBN when an optical signal passes through another optical relay, where the information includes the PBN occurrence frequency (LF/HF).

After the transmission compensation control unit 21 completes transmission compensation by controlling at least one of the optical transmitter 23 and the transmission WSS 24, the transmission compensation update completion notifying unit 22 notifies the network management apparatus 10 of the completion of transmission compensation.

The optical transmitter 23 is a device for generating an optical signal and transmitting the signal to the network, and includes a light source 25 capable of generating light of a specific wavelength. The light source 25 can adjust the carrier frequency and is implemented by a laser diode (LD), for example. The optical transmitter 23 is an optical signal generator that can generate an optical signal of a specific wavelength. In the WDM system, a plurality of optical transmitters is typically installed in each node so that a plurality of optical signals of different carrier frequencies generated by the transmitters is sent to the network. Although not illustrated in FIG. 4, the transmitting node 20 is assumed to include a plurality of the optical transmitters 23. An optical signal generated by each of the plurality of optical transmitters 23 passes through the transmission WSS 24 to be sent out to a corresponding path.

The transmission WSS 24 sends the optical signal generated by each of the optical transmitters 23 to the path determined for each optical signal.

The relay node 30 includes a node setting change control unit 31, a node setting change completion notifying unit 32, and a relay node wavelength selective switch (WSS) 33. The relay node 30 receives a WDM optical signal, which is a wavelength division multiplexed optical signal, from another relay node 30 or the transmitting node 20, and relays the WDM optical signal received to another relay node 30. When relaying the WDM optical signal, the relay node 30 can perform one or both of an insertion process that adds an optical signal to the WDM optical signal and a branching process that extracts some or all of the optical signals from the WDM optical signal.

The relay node WSS 33 is used to switch the path of the optical signal passing through the relay node 30, insert an optical signal to the optical signal passing through the relay node 30, and branch some or all of the optical signals included in the optical signals passing through the relay node 30. Here, one or a plurality of the relay node WSSs 33 is used depending on the path to which the relay node 30 is connected and the function implemented by the relay node 30. The node setting change control unit 31 changes the setting of the relay node WSS 33 on the basis of an instruction for changing the node setting received from the network management apparatus 10. After the node setting change control unit 31 completes a change in the setting of the relay node WSS 33, the node setting change completion notifying unit 32 notifies the network management apparatus 10 that the change in the setting of the relay node 30 is completed.

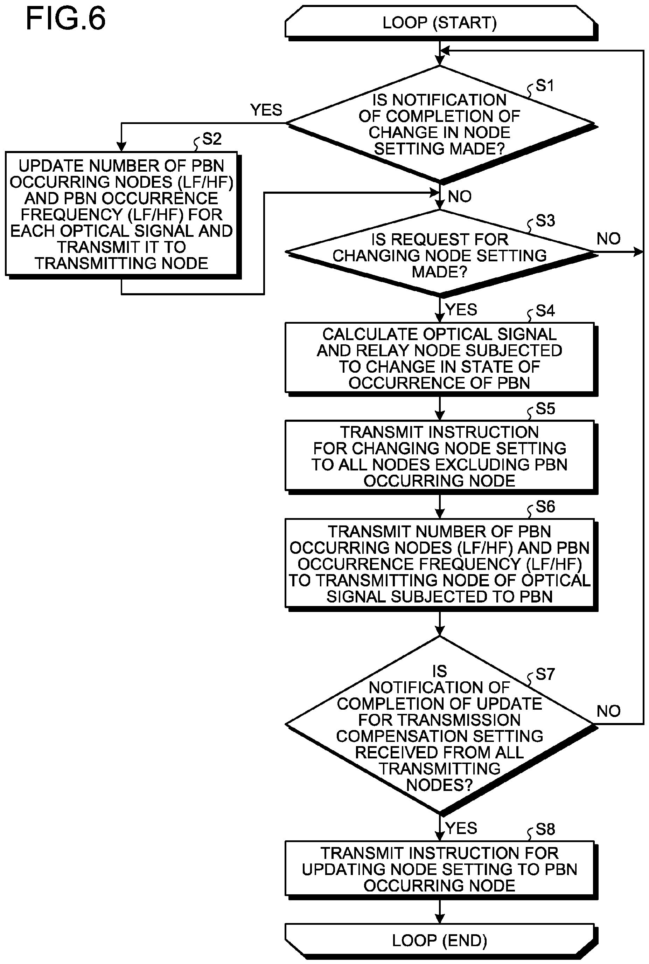

Next, the operation of the present invention will be described with reference to FIGS. 6 to 14, the operation specifically being one that reduces deterioration in signal quality due to PBN by updating the setting for transmission compensation in advance at the transmitting node 20 before PBN newly occurs with switching of the path of an optical signal or the like.

FIG. 6 is a flowchart illustrating an example of the operation of the network management apparatus 10 according to the first embodiment. As illustrated in FIG. 6, the network management apparatus 10 performs the operation in a loop at all times and repeats the processing between a loop start and a loop end.

After starting the operation, the network management apparatus 10 determines whether or not a notification of completion of a change in the node setting is received from a relay node which is managed by the apparatus (step S1). Note that a result of determination in step S1 is "No" immediately after the start of the operation because the network management apparatus 10 does not issue an instruction for changing the node setting to any of the transmitting node 20 and the relay nodes 30. If a notification of completion of a change in the node setting is not received (No in step S1), the network management apparatus 10 determines whether a request for changing the node setting is made, the request being made at the time of switching the path of an optical signal or the like (step S3). In step S3, the node setting change request receiving unit 11 determines whether or not the request for changing the node setting is received from a network administrator or the like. The processing returns to step S1 if the request for changing the node setting is not made (No in step S3).

If the request for changing the node setting is made (Yes in step S3), the network management apparatus 10 calculates an optical signal and a relay node subjected to a change in the state of occurrence of PBN (step S4). In step S4, the state changing node calculating unit 12 calculates the optical signal and relay node subjected to a change in the state of occurrence of PBN with a change in the setting of each node as described above. In calculating the optical signal subjected to a change in the state of occurrence of PBN, the state changing node calculating unit 12 identifies the state of occurrence of PBN for each of the LF side and the HF side of each optical signal, and calculates the number of PBN occurring nodes indicating the number of relay nodes subjected to PBN. The number of PBN occurring nodes on LF side will be referred to as the number of PBN occurring nodes (LF), and the number of PBN occurring nodes on HF side will be referred to as the number of PBN occurring nodes (HF). The number of PBN occurring nodes (LF) of each optical signal indicates the number of PBNs newly occurring on the LF side of a corresponding optical signal when the node setting is changed, that is, the number of PBNs not occurring at the moment but occurring on the LF side as a change in the node setting is completed. The number of PBN occurring nodes (HF) of each optical signal indicates the number of PBNs newly occurring on the HF side of a corresponding optical signal when the node setting is changed, that is, the number of PBNs not occurring at the moment but occurring on the HF side as a change in the node setting is completed. In the following description, the number of PBN occurring nodes (LF) and the number of PBN occurring nodes (HF) may be collectively referred to as "the number of PBN occurring nodes (LF/HF)".

Following step S4, the network management apparatus 10 transmits an instruction for changing the node setting to all nodes excluding the PBN occurring node (step S5). Step S5 is executed by the normal node control unit 13. The normal node control unit 13 receives, from the state changing node calculating unit 12, node setting change information indicating the content of a request for changing the node setting from the network administrator or the like, and generates the instruction for changing the node setting on the basis of the node setting change information.

Following step S5, the network management apparatus 10 transmits the number of PBN occurring nodes (LF/HF) and the PBN occurrence frequency (LF/HF) to the transmitting node that transmits the optical signal subjected to PBN (step S6). The number of PBN occurring nodes (LF/HF) transmitted in step S6 is the number of PBN occurring nodes (LF) and the number of PBN occurring nodes (HF) calculated by the state changing node calculating unit 12 in step S4. The PBN occurrence frequency (LF/HF) transmitted in step S6 is the PBN occurrence frequency (LF/HF) for each optical signal calculated and held by the PBN frequency calculating unit 16. In step S6, the PBN occurring node count notifying unit 15 transmits the number of PBN occurring nodes (LF/HF), and the PBN frequency calculating unit 16 transmits the PBN occurrence frequency (LF/HF). Note that when receiving the number of PBN occurring nodes (LF/HF) and the PBN occurrence frequency (LF/HF) transmitted by the network management apparatus 10 in step S6, the transmitting node changes the setting for transmission compensation on the basis of the information received. After changing the setting for transmission compensation, the transmitting node sends a notification to the effect to the network management apparatus 10.

Following step S6, the network management apparatus 10 checks whether or not a notification of completion of a change, that is, an update, of the setting for transmission compensation is received from all the transmitting nodes to which the number of PBN occurring nodes (LF/HF) and the PBN occurrence frequency (LF/HF) are transmitted in step S6 (step S7). In step S7, the network management apparatus 10 checks whether the notification of completion of an update of the setting for transmission compensation is made from all the transmitting nodes of interest within a predetermined time, and if the notification of completion of an update of the setting for transmission compensation is not received from any of the transmitting nodes after the predetermined time elapses (No in step S7), the processing returns to step S1. Thus, the node setting of the PBN occurring node is not changed until the notification is received. If the notification of completion of an update of the setting for transmission compensation is made from all the transmitting nodes of interest within the predetermined time (Yes in step S7), the network management apparatus 10 transmits an instruction for updating the node setting to the PBN occurring node that handles the optical signal transmitted from the transmitting node at which the update of the setting for transmission compensation is completed (step S8). Step S8 is executed by the PBN occurring node control unit 14. The processing returns to step S1 after execution of step S8. After that, if a notification of completion of a change in the node setting is received from the PBN occurring node to which the instruction for changing the node setting is transmitted in step S8 (Yes in step S1), the network management apparatus 10 updates the number of PBN occurring nodes (LF/HF) and the PBN occurrence frequency (LF/HF) for each optical signal and transmits an update result to the corresponding transmitting node (step S2). In other words, the network management apparatus 10 updates the number of PBN occurring nodes (LF/HF) and the PBN occurrence frequency (LF/HF) for each optical signal, and transmits the number of PBN occurring nodes (LF/HF) and the PBN occurrence frequency (LF/HF) for each signal after update to the corresponding transmitting node. The corresponding transmitting node is a transmitting node that transmits an optical signal for which the number of PBN occurring nodes (LF/HF) and the PBN occurrence frequency (LF/HF) are updated. In step S2, the state changing node calculating unit 12 updates the number of PBN occurring nodes (LF/HF) being held, and the PBN frequency calculating unit 16 updates the PBN occurrence frequency (LF/HF) being held. Moreover, the PBN occurring node count notifying unit 15 transmits the number of PBN occurring nodes (LF/HF) after update to the corresponding transmitting node, and the PBN frequency calculating unit 16 transmits the PBN occurrence frequency (LF/HF) after update to the corresponding transmitting node.

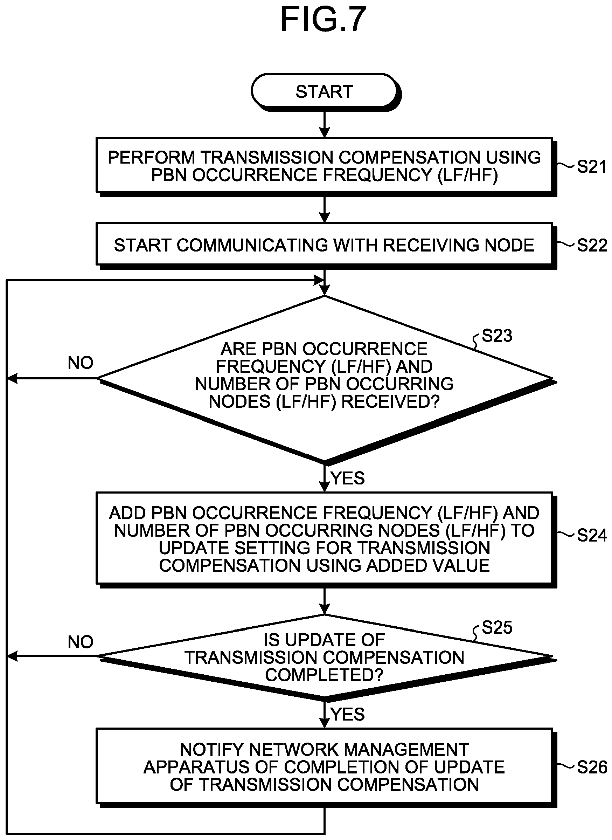

FIG. 7 is a flowchart illustrating an example of the operation of the transmitting node 20 according to the first embodiment.

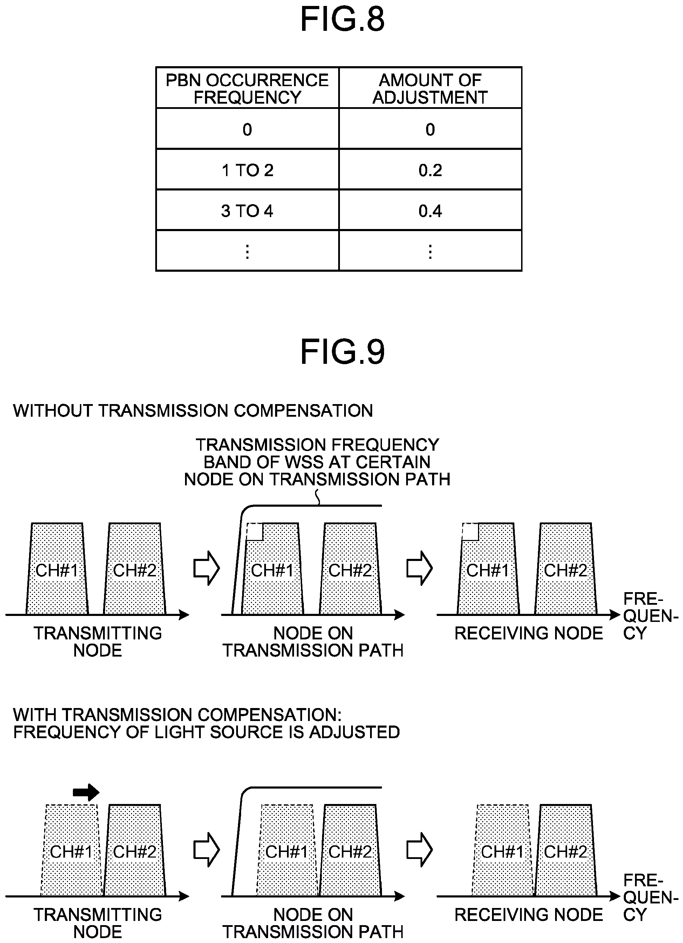

Upon starting the operation, the transmitting node 20 first performs transmission compensation by using the PBN occurrence frequency (LF/HF) received from the network management apparatus 10 in the past and held (step S21). The transmitting node 20 performs transmission compensation by comparing the PBN occurrence frequency (LF/HF) with a transmission compensation reference table and adjusting the frequency of an optical signal to be transmitted. FIG. 8 is a table illustrating an example of the transmission compensation reference table. The transmission compensation reference table illustrated in FIG. 8 includes the number of occurrences of PBN and a corresponding amount of adjustment. Note that the number of occurrences of PBN corresponds to a result of addition of the PBN occurrence frequency and the number of PBN occurring nodes but, at the time step S21 is executed, the number of occurrences of PBN corresponds to the PBN occurrence frequency (LF/HF) since the node setting is not changed and the number of PBN occurring nodes equals zero. The amount of adjustment is an amount of adjustment related to the frequency of the optical signal subjected to adjustment. In the transmitting node 20, the transmission compensation control unit 21 adjusts the frequency of the optical signal to be transmitted by instructing the optical transmitter 23 to change the oscillating frequency of the light source 25. At this time, the transmission compensation control unit 21 performs transmission compensation by comparing each of the PBN occurrence frequency (LF) and the PBN occurrence frequency (HF) with the transmission compensation reference table and adjusting the frequency of the optical signal to be transmitted.
That is, the transmission compensation control unit 21 performs transmission compensation based on the PBN occurrence frequency (LF) and transmission compensation based on the PBN occurrence frequency (HF).

An example of transmission compensation will be described with reference to FIG. 9. FIG. 9 is a diagram illustrating an example of transmission compensation performed by the transmitting node according to the first embodiment. FIG. 9 illustrates an example where the transmitting node 20 compensates for PBN on the low frequency side (LF side) that occurs at the relay node 30 on the transmission path when generating and transmitting the optical signals of CH #1 and CH #2. The upper part of FIG. 9 illustrates an operation example when transmission compensation is not performed, while the lower part of FIG. 9 illustrates an operation example when transmission compensation is performed. Moreover, in each of the upper and lower parts, the left side illustrates a state of the optical signals of CH #1 and CH #2 transmitted from the transmitting node, the center part illustrates a state of the optical signals of CH #1 and CH #2 passing through the relay node in the middle of the transmission path, and the right side illustrates a state of the optical signals of CH #1 and CH #2 received by a receiving node.

In the example illustrated in FIG. 9, the transmitting node 20 performs transmission compensation by shifting the frequency of the optical signal of CH #1 to the high frequency side. When transmission compensation is not performed, as illustrated in the upper part of FIG. 9, the optical signal of CH #1 is subjected to PBN on the low frequency side at the time of passing through the relay node. On the other hand, as illustrated in the lower part, PBN can be reduced by performing transmission compensation to adjust the frequency of the optical signal of CH #1 to the high frequency side.

Note that although the example of FIG. 9 shifts the optical signal to the high frequency side in order to compensate for PBN occurring on the low frequency side, PBN occurring on the high frequency side is compensated for by shifting the optical signal to the low frequency side by an amount of adjustment corresponding to the PBN occurrence frequency (HF).

Following step S21, the transmitting node 20 starts communicating with the receiving node, that is, a node located at the end on the transmission path of the optical signal (step S22).

Next, the transmitting node 20 checks whether or not the PBN occurrence frequency (LF/HF) and the number of PBN occurring nodes (LF/HF) are received from the network management apparatus 10 (step S23). In step S23, the transmitting node checks whether or not the PBN occurrence frequency (LF/HF) and the number of PBN occurring nodes (LF/HF) transmitted from the network management apparatus 10 in step S6 of FIG. 6 are received. Step S23 is executed by the transmission compensation control unit 21.

The transmission compensation control unit 21 repeats step S23 if the PBN occurrence frequency (LF/HF) and the number of PBN occurring nodes (LF/HF) are not received from the network management apparatus 10 (No in step S23). If the PBN occurrence frequency (LF/HF) and the number of PBN occurring nodes (LF/HF) are received from the network management apparatus 10 (Yes in step S23), the transmission compensation control unit 21 adds the number of PBN occurring nodes (LF/HF) and the PBN occurrence frequency (LF/HF) received, and updates the setting for transmission compensation on the basis of a result of the addition (step S24). Specifically, the transmission compensation control unit 21 adds the number of PBN occurring nodes (LF) and the PBN occurrence frequency (LF) to obtain the number of occurrences of PBN on the LF side, and adds the number of PBN occurring nodes (HF) and the PBN occurrence frequency (HF) to obtain the number of occurrences of PBN on the HF side, thereby performing transmission compensation using these results of the addition (the number of occurrences of PBN on the LF side and the number of occurrences of PBN on the HF side). Note that when the transmitting node is a source of transmission for two or more optical signals, the transmission compensation control unit 21 performs addition of the number of PBN occurring nodes (LF) and the PBN occurrence frequency (LF) and addition of the number of PBN occurring nodes (HF) and the PBN occurrence frequency (HF) for each optical signal. When PBN occurs on both the LF side and the HF side of a certain signal, the transmission compensation control unit 21 performs transmission compensation using the number of occurrences of PBN on the LF side and the number of occurrences of PBN on the HF side of the signal. That is, the transmission compensation control unit 21 compares each of the number of occurrences of PBN on the LF side and the number of occurrences of PBN on the HF side with the transmission compensation reference table and determines the direction and amount of adjustment of the frequency of the optical signal. When the number of occurrences of PBN on the LF side is larger than the number of occurrences of PBN on the HF side, the adjustment is made in the direction from the LF side to the HF side whereas, in the opposite case, the adjustment is made in the opposite direction. No adjustment is necessary when the number of occurrences of PBN on the LF side is the same as the number of occurrences of PBN on the HF side. Note that in step S24, the PBN occurrence frequency (LF/HF) and the number of PBN occurring nodes (LF/HF) are received from the network management apparatus 10 and added by the transmission compensation control unit 21, but the network management apparatus 10 may perform the addition instead and transmit the result of the addition (the number of occurrences of PBN on the LF side and the number of occurrences of PBN on the HF side) to the transmission compensation control unit 21 of the transmitting node 20.

Next, the transmitting node 20 checks whether or not the update of transmission compensation is completed (step S25). The processing returns to step 23 if the update is not yet completed (No in step S25). If the update is completed (Yes in step S25), the transmitting node 20 notifies the network management apparatus 10 of completion of the update of the transmission compensation setting (step S26) and returns to step S23.

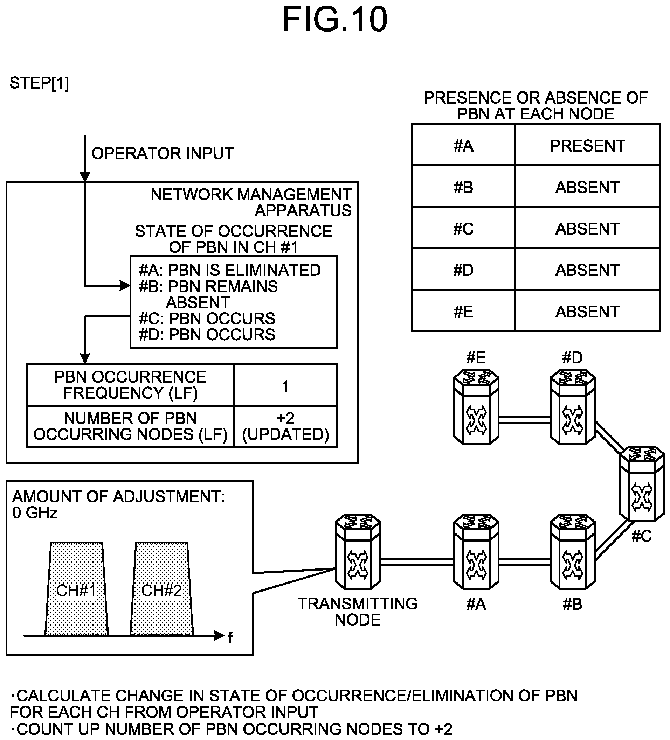

FIGS. 10 to 14 are diagrams each illustrating an example of the overview of the operation of the optical transmission system according to the first embodiment. FIGS. 10 to 14 illustrate an example where a signal is transmitted from the transmitting node and passes through relay nodes #A to #E. In FIGS. 10 to 14, an "operator input" means that an administrator or a maintenance company of the network inputs a destination of the signal or the like to change the setting of the transmission path of each optical signal in the optical transmission network. Moreover, the example illustrated in FIGS. 10 to 14 focuses on the low frequency (LF) side of the optical signal of CH #1 to perform transmission compensation by calculating the number of nodes subjected to a change in the state of occurrence of PBN on the LF side of the optical signal.
The node subjected to a change in the state of occurrence of PBN on the LF side includes a node newly subjected to PBN on the LF side with a change in the setting and a node no longer subjected to PBN on the LF side (that is, a node at which PBN is eliminated) with a change in the setting.

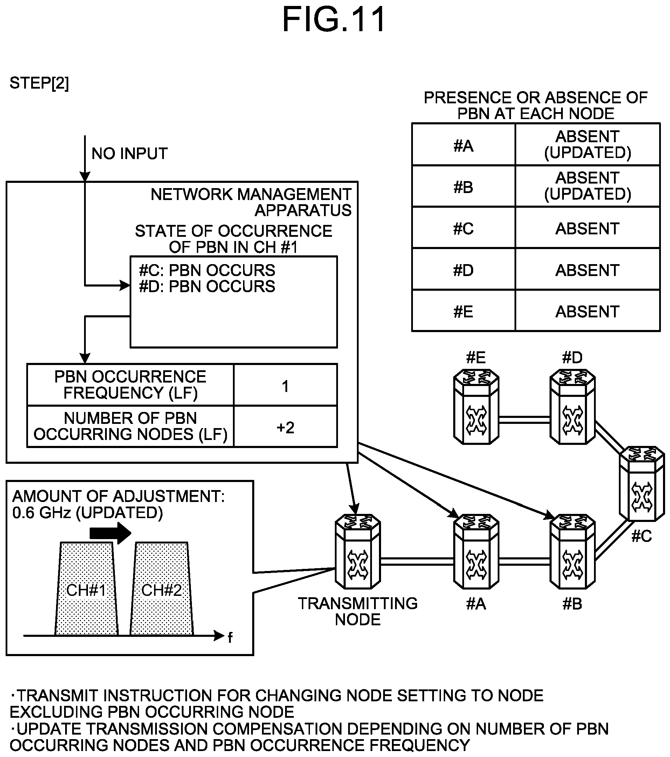

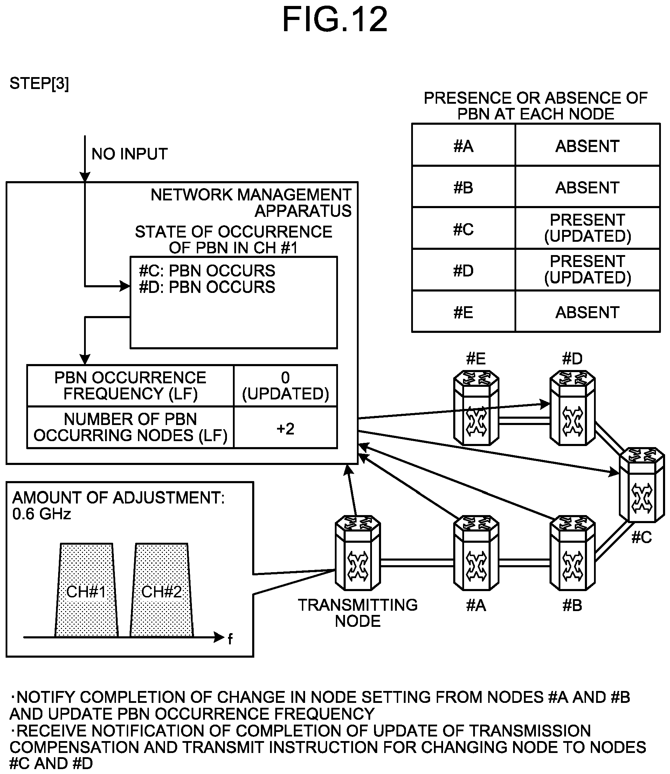

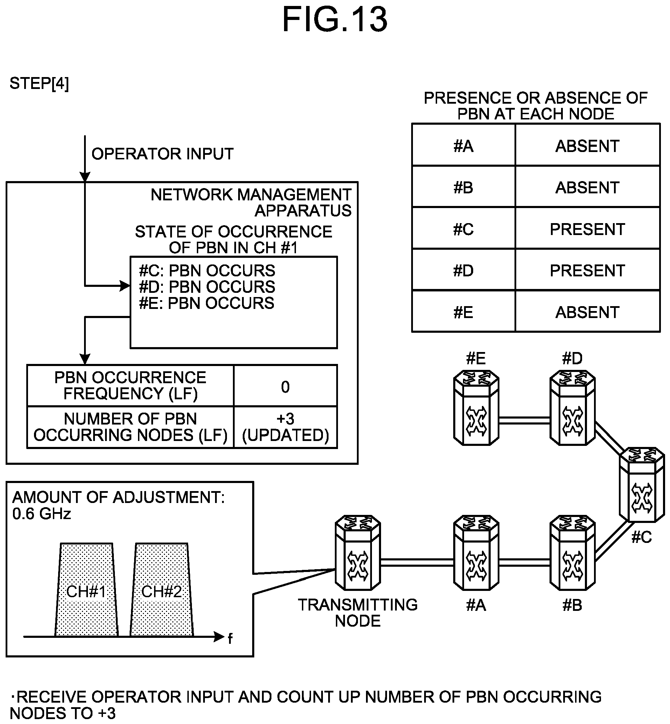

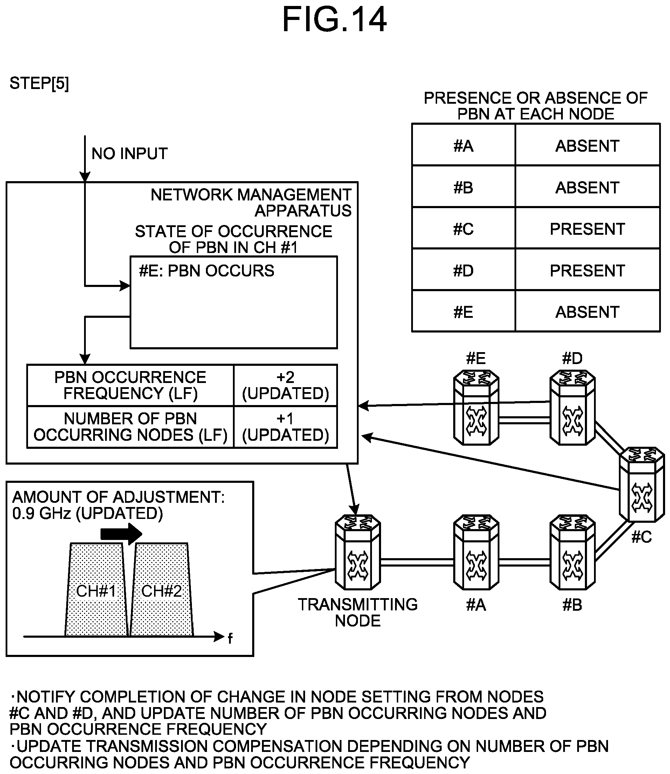

FIG. 10 illustrates the operation of a first step, FIG. 11 illustrates the operation of a second step following the first step, FIG. 12 illustrates the operation of a third step following the second step, FIG. 13 illustrates the operation of a fourth step following the third step, and FIG. 14 illustrates the operation of a fifth step following the fourth step.

The state of occurrence of PBN before the operator input is made in the first step illustrated in FIG. 10 is that PBN occurs on the LF side of the relay node #A and does not occur on the LF side of each of the other relay nodes #B to #E. The PBN occurrence frequency (LF) at this time is equal to "1". When the operator input is made in such a state, the network management apparatus calculates how the state of occurrence of PBN changes with the operator input. In the illustrated example, the network management apparatus calculates that the state of occurrence of PBN in the optical signal of CH #1 changes so that PBN is eliminated at the relay node #A and occurs at the relay nodes #C and #D. As a result, the number of PBN occurring nodes (LF) equals "+2".

Next, as illustrated in the second step of FIG. 11, the network management apparatus transmits an instruction for changing the node setting to relay nodes other than the PBN occurring nodes. Specifically, the network management apparatus transmits the instruction for changing the node setting to the relay nodes #A and #B to instruct a change of the node setting, and further notifies a transmitting node 1 of the PBN occurrence frequency (LF) and the number of PBN occurring nodes (LF). Note that the relay node #E does not correspond to the PBN occurring node but corresponds to one that does not require a change in the node setting, thereby not receiving the instruction for changing the node setting from the network management apparatus.

The relay nodes #A and #B change the node setting upon receiving the instruction for changing the node setting, and when the change is completed, PBN occurring on the LF side of the relay node #A is eliminated. As a result, the state of occurrence of PBN is changed to one in which no PBN occurs on the LF side of the relay nodes #A to #E. Note that although the relay nodes #C and #D are relay nodes newly subjected to PBN (PBN occurring nodes), PBN does not occur on the LF side of the relay nodes #C and #D either because the change in the node setting for the relay nodes #C and #D is not completed at this point. Upon completing the change in the node setting, the relay nodes #A and #B transmit a notification of completion of the change in the node setting to the network management apparatus.

Upon receiving the notification of the PBN occurrence frequency (LF) and the number of PBN occurring nodes (LF), the transmitting node performs transmission compensation on the basis of the PBN occurrence frequency (LF) and the number of PBN occurring nodes (LF). In the example illustrated in FIG. 11, the transmitting node shifts the frequency of the optical signal of CH #1 to the high frequency side by 0.6 GHz. After changing the setting for transmission compensation, the transmitting node transmits a notification of completion of the update for transmission compensation to the network management apparatus.

Next, as illustrated in the third step of FIG. 12, the network management apparatus 10 receives the notification of completion of the change in the node setting from all the relay nodes other than the PBN occurring nodes, and then updates the PBN occurrence frequency (LF) to "0". This is because PBN occurring at the relay node #A is eliminated upon completion of the change in the node setting. The network management apparatus 10 thereafter receives the notification of completion of the update for transmission compensation from the transmitting node, and then transmits an instruction for changing the node setting to the relay nodes #C and #D which are the PBN occurring nodes.

The relay nodes #C and #D change the node setting upon receiving the instruction for changing the node setting, and when the change is completed, PBN occurs on the LF side of the optical signal of CH #1 at the relay nodes #C and #D. As a result, the state of occurrence of PBN is changed to one in which PBN does not occur on the LF side at the relay nodes #A, #B, and #E and occurs on the LF side at the relay nodes #C and #D. Upon completing the change in the node setting, the relay nodes #C and #D transmit a notification of completion of the change in the node setting to the network management apparatus.

Here, it is assumed that the operator input is made again after the network management apparatus 10 transmits the instruction for changing the node setting to the relay nodes #C and #D being the PBN occurring nodes and before the apparatus receives the notification of completion of the change in the node setting corresponding to the instruction (the fourth step in FIG. 13). In this case, as with the first step above, the network management apparatus 10 calculates how the state of occurrence of PBN changes with the operator input. In the illustrated example, the network management apparatus calculates that the state of occurrence of PBN in the optical signal of CH #1 changes so that PBN occurs at the relay node #E in addition to the relay nodes #C and #D. As a result, the number of PBN occurring nodes (LF) equals "+3". Note that at this point, the network management apparatus has not received a response corresponding to the instruction for changing the node setting transmitted to the relay nodes #C and #D in the third step above, specifically, the notification of completion of the change in the node setting. The PBN occurrence frequency (LF) is thus not updated but remains "0".

After that, as illustrated in the fifth step of FIG. 14, the network management apparatus 10 receives the notification of completion of the change in the node setting from the relay nodes #C and #D, thereby updating the number of PBN occurring nodes (LF) to "+1" and the PBN occurrence frequency (LF) to "+2". The network management apparatus 10 further notifies the transmitting node of the PBN occurrence frequency (LF) and the number of PBN occurring nodes (LF). Upon receiving the notification, the transmitting node performs transmission compensation on the basis of the PBN occurrence frequency (LF) and the number of PBN occurring nodes (LF). In the illustrated example, the transmitting node shifts the frequency of the optical signal of CH #1 to the high frequency side by 0.9 GHz from a default position, that is, the frequency where transmission compensation is not performed. After changing the setting for transmission compensation, the transmitting node transmits a notification of completion of the update for transmission compensation to the network management apparatus 10.

As described above, upon receiving the operator input, specifically, the node setting change information for changing the setting of the optical transmission network, the network management apparatus performs the processing that transmits the instruction for changing the setting to the relay node requiring a change in the setting on the basis of the input information, and the processing that calculates the point at which PBN newly occurs and the point at which PBN is eliminated, that is, the relay node at which PBN newly occurs and the relay node at which PBN is eliminated, separately for the LF side and the HF side for each optical signal, and transmits the results of the calculation (the number of PBN occurring nodes (LF/HF) and the PBN occurrence frequency (LF/HF)) as information used in transmission compensation to each transmitting node being the relay node that generates and transmits each optical signal. The instruction for changing the setting is first transmitted to a relay node not corresponding to the PBN occurring node which is a relay node subjected to PBN, and then transmitted to the PBN occurring node after the transmitting node completes the change in the setting for transmission compensation.

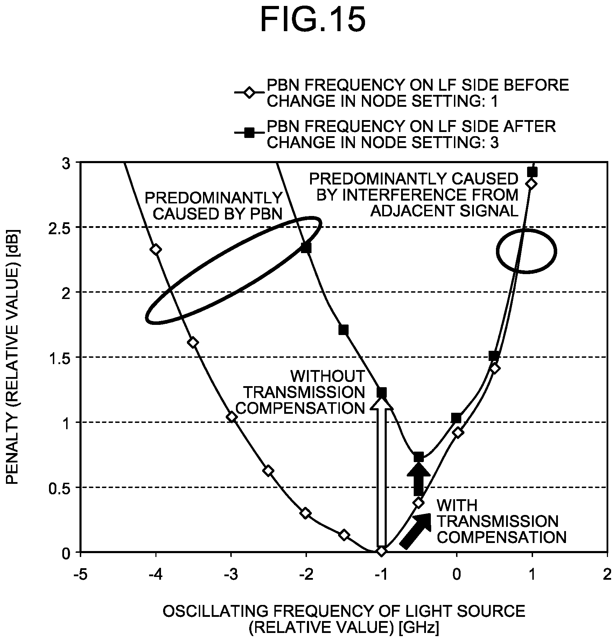

Effects of the optical transmission system 100 according to the present embodiment will be described with reference to FIG. 15 which is a diagram for explaining the effects of the optical transmission system according to the first embodiment. FIG. 15 is a graph illustrating an example of a penalty which is an amount deterioration in signal quality of CH #1 when transmission compensation illustrated in FIG. 9 is performed. FIG. 15 illustrates a relative value of the penalty of signal quality with respect to the oscillating frequency (relative value) of the light source 25. The penalty considered in this case is caused by interference from an adjacent signal and by PBN at the relay node. When the oscillating frequency of the light source 25 is shifted in the positive direction, that is, to the high frequency side, the penalty is predominantly caused by the interference from the adjacent signal. On the other hand, when the oscillating frequency of the light source 25 is shifted in the negative direction, that is, to the low frequency side, the penalty is predominantly caused by PBN. The PBN occurrence frequency (LF) equals "1" before a change in the node setting, so that the oscillating frequency of the light source 25 is set accordingly near the optimum value of -1 GHz. When the node setting is changed in such a state and PBN on the LF side is increased to "3", one can see that the penalty caused by PBN increases significantly. On the other hand, when transmission compensation is performed before a change in the node setting, an excessive penalty can be prevented by adjusting the oscillating frequency of the light source 25 to around -0.5 GHz before the PBN occurrence frequency (LF) is increased.

Note that in the optical transmission system according to the present embodiment, the network management apparatus 10 calculates the PBN occurrence frequency (LF/HF) and the number of PBN occurring nodes (LF/HF) to notify the transmitting node of the result of the calculation, but the transmitting node may instead calculate the PBN occurrence frequency (LF/HF) and the number of PBN occurring nodes (LF/HF) of the optical signal to be transmitted from itself and perform a setting for transmission compensation according to the result of the calculation. In this case, the network management apparatus 10 receives an operation instructing a change in the node setting from the network administrator or the like, and transmits the node setting change information indicating the content of the instruction received to each transmitting node.

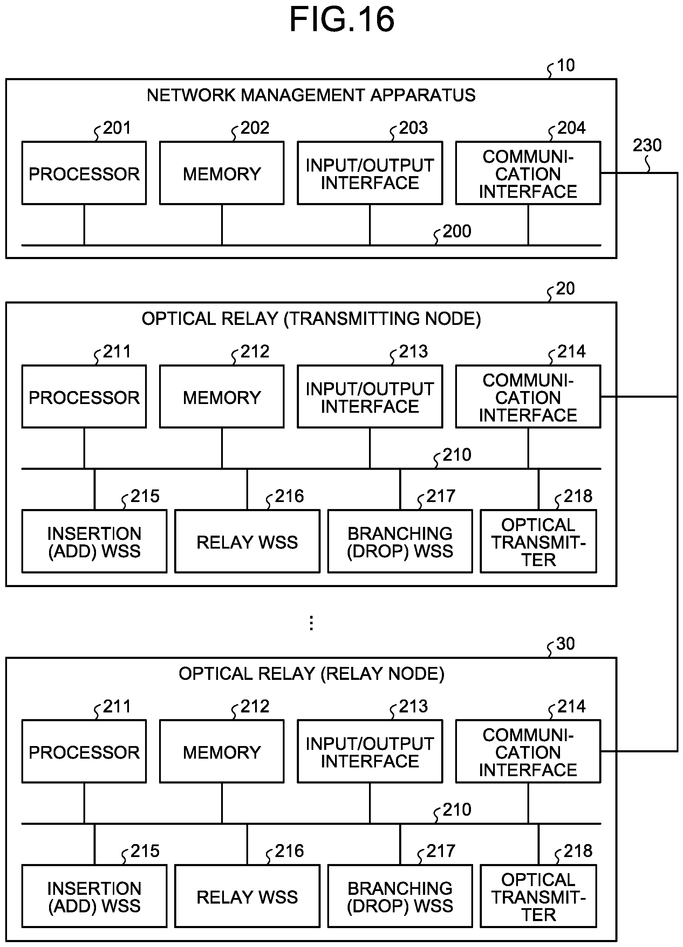

Next, the hardware configuration of each device included in the optical transmission system 100 will be described. FIG. 16 is a diagram illustrating an example of the hardware configuration of each device included in the optical transmission system 100.

The network management apparatus 10 can be implemented by a processor 201 such as a central processing unit (CPU) or a system large scale integration (LSI), a memory 202 including a random access memory (RAM), a read only memory (ROM), and the like, an input/output interface 203, and a communication interface 204. The processor 201, the memory 202, the input/output interface 203, and the communication interface 204 are connected to a bus 200 to be able to mutually exchange data, control information, and the like via the bus 200. The memory 202 stores various data and programs. The input/output interface 203 is used to read input information such as settings for path switching, insertion, and branching of a signal. The communication interface 204 is used to receive information from each optical relay and transmit a control signal to each optical relay via a control signal line 230. The network management apparatus 10 is implemented by the processor 201 executing the programs stored in the memory 202 for operating as the network management apparatus 10.

The optical relays 20 and 30 can each be implemented by a processor 211, a memory 212, an input/output interface 213, and a communication interface 214 which are devices similar to the processor 201, the memory 202, the input/output interface 203, and the communication interface 204 included in the network management apparatus 10, respectively. In addition, each of the optical relays can be implemented by an insertion WSS 215 used for signal insertion, a branching WSS 217 used for signal branching, a relay WSS 216 used for relaying and path switching, and an optical transmitter 218 for transmitting a signal. These devices are connected to a bus 210 to be able to mutually exchange data, control information, and the like via the bus 210. The input/output interface 213 is used to transmit and receive a control signal to and from the insertion WSS 215, the branching WSS 217, and the relay WSS 216 and to transmit and receive a control signal to and from the optical transmitter 218. The communication interface 214 is used to transmit and receive a control signal to and from the network management apparatus 10 via the control signal line 230. The optical relays 20 and 30 are each implemented by the processor 211 executing the programs stored in the memory 212 for operating as the optical relay 20 or 30.

### Second Embodiment.

An optical transmission system according to a second embodiment has the configuration similar to the configuration of the optical transmission system 100 according to the first embodiment. Moreover, a network management apparatus and optical relays according to the second embodiment have the configurations similar to the configuration of the network management apparatus 10 and the optical relays 20 and 30 according to the first embodiment, respectively. The present embodiment will describe differences from the first embodiment.

The optical transmission system according to the present embodiment is different from the optical transmission system according to the first embodiment in terms of transmission compensation performed by the optical relay 20 being the transmitting node.

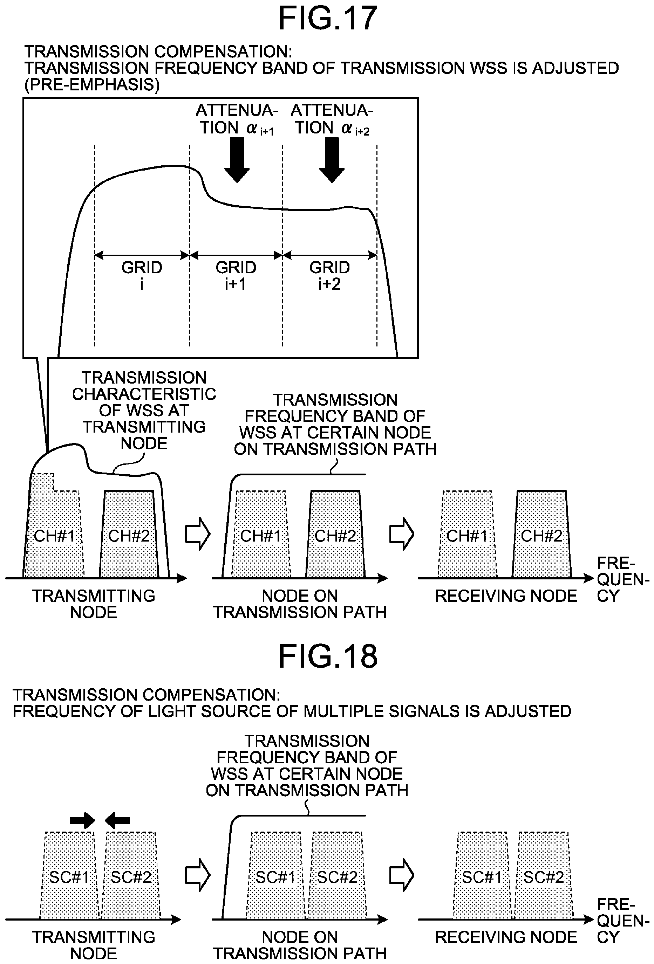

FIG. 17 is a diagram illustrating an example of transmission compensation performed by the optical relay being the transmitting node according to the second embodiment. The transmitting node 20 according to the present embodiment performs transmission compensation using the transmission WSS 24. Specifically, at the transmitting node 20, the transmission compensation control unit 21 as a controller changes the setting of the transmission frequency band of the transmission WSS 24 on the basis of the number of PBN occurring nodes (LF/HF) and the PBN occurrence frequency (LF/HF). The transmission compensation control unit 21 of the transmitting node 20 adds the number of PBN occurring nodes (LF) and the PBN occurrence frequency (LF) to obtain the number of occurrences of PBN on the LF side and adds the number of PBN occurring nodes (HF) and the PBN occurrence frequency (HF) to obtain the number of occurrences of PBN on the HF side for each optical signal, thereby determining the shape of the transmission frequency band of the transmission WSS 24 by comparing each of the number of occurrences of PBN on the LF side and the number of occurrences of PBN on the HF side with the transmission compensation reference table. The shape of the transmission frequency band of the transmission WSS 24 can be controlled at will to some extent by setting an attenuation applied to the transmission WSS 24 on a frequency grid basis. The frequency grid corresponds to 12.5 GHz, for example. As illustrated in FIG. 17, the wavelength selective switch used as the transmission WSS 24 can reduce the influence of PBN by setting the attenuation such that the transmittance in a frequency grid corresponding to the frequency range subjected to PBN is higher than the transmittance in a surrounding frequency grid. At this time, the attenuation applied to each frequency grid varies depending on the number of occurrences of PBN on the LF side and the number of occurrences of PBN on the HF side. The transmission compensation reference table used in transmission compensation by the transmission compensation control unit 21 according to the present embodiment may have the structure including the number of occurrences of PBN and a corresponding attenuation, that is, the structure in which the amount of adjustment in the transmission compensation reference table in FIG. 8 is replaced by the attenuation.

The hardware configuration of each device included in the optical transmission system according to the present embodiment is similar to the hardware configuration of each device included in the optical transmission system according to the first embodiment.

Effects of the second embodiment will be described. As illustrated in FIG. 17, the frequency range (frequency grid) where the signal is subjected to PBN is compensated for (or pre-emphasized) by the shape of the transmission frequency band of the transmission WSS 24, so that the degree of PBN occurring at the relay node can be reduced and that deterioration in signal quality can be reduced as a result.

Note that in addition to the transmission compensation described in the present embodiment, the transmission compensation described in the first embodiment, that is, the control to adjust the frequency of the optical signal by changing the oscillating frequency of the light source 25, may be performed.

### Third Embodiment.

An optical transmission system according to a third embodiment has the configuration similar to the configuration of the optical transmission system 100 according to the first embodiment. Moreover, a network management apparatus and optical relays according to the third embodiment have the configurations similar to the configuration of the network management apparatus 10 and the optical relays 20 and 30 according to the first embodiment, respectively. The present embodiment will describe differences from the first embodiment.

The optical transmission system according to the present embodiment is different from the optical transmission system according to the first and second embodiments in terms of transmission compensation performed by the optical relay 20 being the transmitting node.

The transmitting node 20 according to the present embodiment performs transmission compensation by adjusting the frequency intervals of a plurality of optical signals output from a plurality of the optical transmitters 23 in relation to one another. The optical transmitter 23 may include a plurality of light sources to generate a plurality of optical signals and adjust the frequency intervals of the plurality of optical signals. Instead of performing transmission compensation by the adjustment on the optical signal basis, the transmitting node 20 may adjust the frequency interval of one signal on a subcarrier (SC) basis, the signal being output from one or a plurality of the optical transmitters 23 and including a group of subcarriers having different carrier frequencies. The transmission compensation control unit 21 of the transmitting node 20 adjusts the frequency interval between SC #1 and SC #2 by changing the setting for the light source 25 of the optical transmitter 23. Note that the signal including the group of subcarriers is called a superchannel, the application of which to the multipath WDM system supporting flexible grid is known to have been reported. For example, in a case where PBN occurs on the low frequency side of SC #1, the influence of PBN can be reduced by decreasing the frequency interval between SC #1 and SC #2 as illustrated in FIG. 18. The frequency interval is adjusted by the amount corresponding to the number of occurrences of PBN on the LF side and the number of occurrences of PBN on the HF side. As in the first and second embodiments, the transmission compensation control unit 21 determines the amount of adjustment of the frequency interval by using the transmission compensation reference table. The transmission compensation reference table used may include the number of occurrences of PBN and a corresponding amount of adjustment.

The hardware configuration of each device included in the optical transmission system according to the present embodiment is similar to the hardware configuration of each device included in the optical transmission system according to the first and second embodiments.

Effects of the third embodiment will be described. The optical transmission system according to the third embodiment can obtain the effects similar to the effects of the first embodiment. That is, the transmitting node performs transmission compensation by changing the setting of the frequency interval between the optical signals or the frequency interval between the subcarriers before changing the setting of the node newly subjected to PBN (PBN occurring node), thereby being able to reduce the influence of PBN as the entire system while preventing the occurrence of an excessive penalty at the time of changing the node setting of the PBN occurring node.

Note that in addition to the transmission compensation described in the present embodiment, the transmission compensation described in the second embodiment, that is, the control to reduce PBN by changing the setting of the transmission frequency band of the transmission WSS 24, may be performed.

The configuration illustrated in the above embodiment merely illustrates an example of the content of the present invention, and can thus be combined with another known technique or partially omitted and/or modified without departing from the scope of the present invention.

### Reference Signs List

1, 10 network management apparatus; 2 to 6 node; 11 node setting change request receiving unit; 12 state changing node calculating unit; 13 normal node control unit; 14 PBN occurring node control unit; 15 PBN occurring node count notifying unit; 16 PBN frequency calculating unit; 20 optical relay (transmitting node); 30-1, 30-n optical relay (relay node); 21 transmission compensation control unit; 22 transmission compensation update completion notifying unit; 23 optical transmitter; 24 transmission wavelength selective switch (transmission WSS); 25 light source (LD); 31 node setting change control unit; 32 node setting change completion notifying unit; 33 relay node wavelength selective switch (relay node WSS); 100 optical transmission system.

## Claims

1. An optical relay of an optical transmission system including an optical transmission network formed by a plurality of the optical relays and a network management apparatus to manage the optical transmission network, the optical relay comprising:
an optical signal generator to be able to generate an optical signal of a specific wavelength;
a wavelength selective switch to be able to switch a path on a wavelength basis; and
a controller to control the optical signal generator, wherein
when the controller receives, from the network management apparatus, information on a band limitation occurrence frequency that is the number of occurrences of band limitation when the optical signal generated by the optical signal generator passes through another one of the optical relays, the controller adjusts a frequency of the optical signal by changing a setting of the optical signal generator on the basis of the information received.

2. The optical relay according to claim 1, wherein
a plurality of the optical signal generators is included, and
the controller changes settings of two or more of the plurality of optical signal generators on the basis of the information received.

3. The optical relay according to claim 1 or 2, wherein
the band limitation occurrence frequency includes the number of occurrences of band limitation on each of a low frequency side and a high frequency side of a corresponding optical signal, and
the controller executes processing that changes the setting of the optical signal generator on the basis of the number of occurrences of band limitation on the low frequency side of the optical signal generated by the optical signal generator, and processing that changes the setting of the optical signal generator on the basis of the number of occurrences of band limitation on the high frequency side of the optical signal generated by the optical signal generator.

4. An optical relay of an optical transmission system including an optical transmission network formed by a plurality of the optical relays and a network management apparatus to manage the optical transmission network, the optical relay comprising:
an optical signal generator to be able to generate an optical signal of a specific wavelength;
a wavelength selective switch to be able to switch a path on a wavelength basis; and
a controller to control the wavelength selective switch, wherein
when the controller receives, from the network management apparatus, information on a band limitation occurrence frequency that is the number of occurrences of band limitation when the optical signal generated by the optical signal generator passes through another one of the optical relays, the controller adjusts transmittance of the optical signal by changing a setting of a transmission frequency band of the wavelength selective switch on the basis of the information received.

5. The optical relay according to any one of claims 1 to 4, wherein the optical transmission system is a multipath wavelength division multiplexed transmission system supporting flexible grid.

6. A network management apparatus of an optical transmission system including an optical transmission network formed by a plurality of optical relays to be able to generate an optical signal of a specific wavelength and the network management apparatus to manage the optical transmission network, the network management apparatus comprising:
a request receiving unit to receive a request for changing a path of an optical signal in the optical transmission network;
a setting change unit to instruct the optical relays to change a setting on the basis of the request for changing a path;
a band limitation occurrence frequency calculating unit to calculate the number of occurrences of band limitation when the optical signal passes through the optical relays on the basis of the request for changing a path; and
an information transmission unit to transmit information indicating the number of occurrences of band limitation calculated by the band limitation occurrence frequency calculating unit to any of the plurality of optical relays that generates an optical signal corresponding to the information indicating the number of occurrences of band limitation.

7. The network management apparatus according to claim 6, wherein
when the request receiving unit receives the request for changing a path, the setting change unit instructs a setting change to any of the optical relays that is not subjected to the band limitation even when the setting change is made on the basis of the request for changing a path, and instructs a setting change to any of the optical relays that is subjected to the band limitation when the setting change is made on the basis of the request for changing a path after a notification of completion of the setting change based on information transmitted from the information transmission unit is made by any of the optical relays receiving the information.

8. An optical transmission system comprising:
a plurality of optical relays forming an optical transmission network; and
a network management apparatus to manage the optical transmission network, wherein
the network management apparatus includes:
a request receiving unit to receive a request for changing a path of an optical signal in the optical transmission network;
a setting change unit to instruct the optical relays to change a setting on the basis of the request for changing a path;
a band limitation occurrence frequency calculating unit to calculate the number of occurrences of band limitation when the optical signal passes through the optical relays on the basis of the request for changing a path; and
an information transmission unit to transmit band limitation occurrence frequency information indicating the number of occurrences of band limitation calculated by the band limitation occurrence frequency calculating unit to any of the plurality of optical relays that generates an optical signal corresponding to the band limitation occurrence frequency information, and
the optical relays each include:
an optical signal generator to be able to generate an optical signal of a specific wavelength;
a wavelength selective switch to be able to switch a path on a wavelength basis; and
a controller to receive the band limitation occurrence frequency information from the information transmission unit and adjust a frequency of the optical signal by changing a setting of the optical signal generator on the basis of the band limitation occurrence frequency information received.

9. The optical transmission system according to claim 8, wherein
when the request receiving unit receives the request for changing a path, the setting change unit instructs a setting change to any of the optical relays that is not subjected to the band limitation even when the setting change is made on the basis of the request for changing a path, and instructs a setting change to any of the optical relays that is subjected to the band limitation when the setting change is made on the basis of the request for changing a path after a setting change based on the band limitation occurrence frequency information transmitted from the information transmission unit is made by any of the optical relays receiving the band limitation occurrence frequency information.

10. A setting changing method for changing a setting of a plurality of optical relays in an optical transmission system including an optical transmission network formed by the plurality of optical relays and a network management apparatus to manage the optical transmission network, the method comprising:
a request receiving step in which the network management apparatus receives a request for changing a path of an optical signal in the optical transmission network;
a band limitation occurrence frequency calculating step in which the network management apparatus calculates the number of occurrences of band limitation when the optical signal passes through the optical relays on the basis of the request for changing a path;
a first instruction step in which the network management apparatus instructs a setting change based on the request for changing a path to any of the optical relays that is not subjected to the band limitation even when the setting change is made on the basis of the request for changing a path;
an information transmission step in which the network management apparatus transmits band limitation occurrence frequency information indicating the number of occurrences of band limitation calculated in the band limitation occurrence frequency calculating step to any of the plurality of optical relays that generates an optical signal corresponding to the band limitation occurrence frequency information;
an adjustment step in which any of the plurality of optical relays receiving the band limitation occurrence frequency information adjusts a frequency of the optical signal generated on the basis of the band limitation occurrence frequency information and, after completing the adjustment, notifies the network management apparatus of completion of the adjustment; and
a second instruction step in which, after receiving the notification of completion of the adjustment, the network management apparatus instructs a setting change based on the request for changing a path to any of the optical relays that is subjected to the band limitation when the setting change is made on the basis of the request for changing a path.
